# EUROPÄISCHE PATENTSCHRIFT

(11) **EP 0 522 240 B1**
(45) Veröffentlichungstag und Bekanntmachung des Hinweises auf die Patenterteilung: **20.11.1996**
(21) Anmeldenummer: 92105080.3
(22) Anmeldetag: 25.03.1992
(51) Int. Cl.: B32B 27/32, B32B 7/12, B32B 27/08

(54) **Mehrschichtige Kunststoffverbundfolie, Verfahren zu deren Herstellung und Verwendung**
Multilayer composite film, process for its manufacture and use thereof
Film plastique stratifié, procédé pour sa fabrication et utilisation

(30) Priorität: 29.06.1991 DE 4121598
(43) Veröffentlichungstag der Anmeldung: 13.01.1993
(73) Patentinhaber: ALKOR GMBH KUNSTSTOFFE, D-81451 München (DE)
(72) Erfinder: Schneider, Manfred, W-8911 Hagenheim (DE); Altmann, Heinz, W-8035 Gauting (DE)

(56) Entgegenhaltungen:
- EP-A- 0 210 586
- EP-A- 0 213 441
- EP-A- 0 233 633
- EP-A- 0 312 305
- JP-A-55 103 999

## Beschreibung

Die vorliegende Erfindung betrifft eine mehrschichtige Kunststoffverbundfolie enthaltend mindestens eine Unterschicht oder Unterfolie auf der Basis mindestens eines Polyolefins, mindestens eine unterhalb der Unterfolie oder Unterschicht angeordnete Haftschicht, Haftfolie, Haftvermittlerschicht und/oder Reaktantschicht und mindestens eine oberhalb der Unterschicht oder Unterfolie angeordnete Zwischenschicht oder Folie und eine polymethylmethacrylathaltige ein- oder mehrschichtige Schutzschicht oder Schutzfolie.

Die Erfindung betrifft auch ein Verfahren zur Herstellung einer mehrschichtigen Kunststoffverbundfolie sowie deren Verwendung.

Aus der EP-A 0 210 586 ist bereits eine mehrschichtige Abdeckbahn zum Oberflächenschutz von Kunststoffplatten bekannt, die aus einer oberen rauhen Deckschicht und einer unteren Trageschicht in Form in einer zweischichtigen Coextrusions-Polyolefinfolie besteht, wobei die Abdeckbahn unterhalb der Unterschicht zusätzlich mit einer Klebstoffschicht versehen ist. Diese Abdeckbahnen sollen gut beschreibbar, z.B. für Konstruktionszeichnungen und dergleichen, sein und auch eine verbesserte Witterungsbeständigkeit, insbesondere auch gegenüber Feuchtigkeit, aufweisen.

Sie weisen jedoch den Nachteil auf, daß trotz des in der Coextrusionsfolie vorhandenen UV-Absorbers der Schutz gegenüber ultravioletten Strahlen nicht ausreicht. Die Kratzbeständigkeit der Abdeckbahn ist nicht ausreichend und eine Bedruckung zwischen Trageschicht und Deckschicht ist nicht möglich. Die polyacrylsäureesterhaltige Klebstoffschicht ist mit Harnstoffharzen nicht gut verklebbar.

Ziel und Aufgabe der vorliegenden Erfindung war es, eine verbesserte Kunststoffverbundfolie, die auch für den Außenbereich anwendbar ist, zu finden. Insbesondere sollte die Folie gut verklebbar mit Klebemitteln auf unterschiedlichsten Untergründen sein. Die Folie sollte sehr hohe UV-Absorptionseigenschaften besitzen und auch die unteren Schichten der Verbundfolie wirkungsvoll gegen UV-Einwirkungen, z.B. zwischen 280 nm bis 380 nm, schützen. Die Folie sollte ein dekoratives Aussehen aufweisen und eine verbesserte Kratzfestigkeit besitzen.

Erfindungsgemäß wurde festgestellt, daß diesen Zielen und Aufgaben eine mehrschichtige Kunststoffverbundfolie gerecht wird, die mindestens eine Unterschicht oder Unterfolie auf der Basis mindestens eines Polyolefins, mindestens eine unterhalb der Unterfolie oder Unterschicht angeordnete Haftschicht, Haftfolie, Haftvermittlerschicht und/oder Reaktantschicht und mindestens eine oberhalb der Unterschicht oder Unterfolie angeordnete obere Schicht oder Folie enthält. Gemäß der Erfindung ist auf der 60 bis 700 µm dicken Polyolefin- oder polyolefinhaltigen Unterschicht oder Unterfolie, die, bezogen auf 100 Gewichtsteile Polyolefin, 5 bis 150 Gewichtsteile mindestens eines anorganisch-chemischen und/oder organisch-chemischen Füllstoffes, Pigmentes oder Füllstoff-Pigment-Gemisches und mindestens einen UV-Stabilisator enthält, mindestens eine Zwischenschicht in Form mindestens einer Primer-, Haftschicht oder Haftfolie und darüber mindestens eine vollflächig oder teilflächig angeordnete Druckschicht, Farbschicht oder Farbdruckschicht und unmittelbar darauf oder über eine oder mehrere Zwischenschichten mindestens eine polymethylmethacrylat-, polyamid- und/oder polyesterhaltige ein- oder mehrschichtige Schutzschicht oder Schutzfolie angeordnet. Bevorzugt enthält diese Schutzschicht oder Schutzfolie in mindestens einer Schicht mindestens einen UV-Absorber und/oder UV-Stabilisator.

Nach einer bevorzugten Ausführungsform ist an der Unterseite der Unterfolie oder Unterschicht mindestens eine wasserlösliche, wasseranlösbare oder wasserunlösliche Haftschicht, Haftvermittlerschicht und/oder eine Reaktantschicht angeordnet, die im Fall der wasserlöslichen oder wasseranlösbaren Haft- oder Reaktantschicht neben einem Bindemittel ein mit der aufzubringenden Klebeschicht reagierendes Mittel oder ein wasserlösliches kationisches Polymeres, vorzugsweise Polyimin, enthält oder im Fall einer wasserunlöslichen oder wasserschwerlösliche Haftschicht oder Haftvermittlerschicht ein polare Gruppen enthaltendes wasserschwer- oder wasserunlösliches Kunstharz oder einen polare Gruppen enthaltenden Kunststoff, vorzugsweise mindestens ein Polyacrylat, Polyester, Polyurethan und/oder ein Polyisocyanat, enthält oder daraus besteht.

Die Schutzschicht oder Schutzfolie weist eine Dicke von 5 bis 300 µm auf und ist transparent und füllstofffrei oder füllstoffarm (Füllstoffgehalt unter 10 Gew.-%, vorzugsweise unter 5 Gew.-%, mit einem mittleren Körnungsdurchmesser unter 10 µm, vorzugsweise unter 5 µm).

Nach einer bevorzugten Ausführungsform ist über der Druckschicht, Farbschicht oder Farbdruckschicht und/oder unter der Schutzfolie oder Schutzschicht mindestens eine Haftschicht, Haftvermittlerschicht oder Haftfolie als Zwischenschicht angeordnet, die transparent und füllstoffarm (weniger als 3 Gew.-% Füllstoffe, vorzugsweise weniger als 1,5 Gew.-% Füllstoffe) oder füllstofffrei ist. Diese Zwischenschicht verbessert die Haftung zwischen den Schichten.

Nach einer weiteren bevorzugten Ausführungsform enthält die unterhalb der Unterfolie oder Unterschicht angeordnete Reaktantschicht einen wasserlöslichen, wasserdispergierbaren oder wasseranlösbaren Kunststoff und mindestens eine wasserlösliche oder wasserdispergierbare reaktionsfähige Verbindung, vorzugsweise mindestens eine organischchemische Säure, ein Säureanhydrid und/oder eine sauer reagierende Verbindung. Diese Schicht verbessert z.B. in Kombination mit einem Zwei- oder Mehrkomponentenkleber oder einem duromeren Kleber die Haftung der Klebschicht.

Nach einer anderen Ausführungsform ist die Haftschicht oder Haftvermittlerschicht, die unterhalb der Unterfolie oder Unterschicht angeordnet oder aufgebracht ist, eine wasserunlösliche Haftschicht und/oder durch ein Polyisocyanat ausgehärtet und/oder die Haftschicht oder Haftvermittlerschicht enthält ein wasserlösliches kationisches Polymer oder Polymergemisch oder besteht daraus.

Die oberhalb der opaken Unterfolie oder Unterschicht der Kunststoffolie angeordnete Kunststoff- oder Kunstharzhaftschicht oder -haftvermittlerschicht enthält nach einer Ausführungsform ein thermoplastisches Acrylathomo-, -co- und/oder -terpolymerisat, vorzugsweise in Kombination mit einem Polyisocyanat, und/oder ein vernetzbares OH-gruppenhaltiges Acrylat, vorzugsweise in Kombination mit einem Polyisocyanat, und/oder ein Methacrylathomo-, -co- und/oder -terpolymerisat und/oder ein Polyisocyanat, vorzugsweise Hexamethylendiisocyanat, und/oder eine Legierung oder Mischung einer oder mehrerer dieser Verbindungen untereinander oder besteht daraus.

Die ein- oder mehrschichtige, vorzugsweise UV-Stabilisatoren und/oder UV-Absorber enthaltende polymethylmethacrylathaltige Schutzschicht oder Schutzfolie ist nach einer bevorzugten Ausführungsform eine durch Extrusion, Coextrusion oder durch Beschichtungsauftrag erhaltene Schicht oder Folie und/oder sie enthält zusätzlich ein Fluorpolymerisat, ein Acrylat und/oder Polyacrylat und/oder eine die Schutzschicht oder Schutzfolie flexibilisierende organisch-chemische Verbindung oder ein flexibilisierendes Polymerisat.

Nach einer anderen Ausführungsform enthält die Schutzschicht oder Schutzfolie Polyamid und/oder Polyester und mindestens einen UV-Stabilisator und/oder UV-Absorber.

Die extrudierte, coextrudierte oder mehrschichtige Schutzschicht oder Schutzfolie weist eine Dicke von 20 bis 350 µm, vorzugsweise 30 bis 250 µm, auf und besitzt einen UV-Absorbergehalt und/oder UV-Stabilisatorgehalt von 0,02 bis 15 Gew.-%, vorzugsweise 0,2 bis 5 Gew.-%, (bezogen auf 100 Gewichtssteile Polymer der Schutzschicht), und/oder enthält mindestens ein flexibilisierendes Acrylat oder Polyacrylat und/oder Polyvinylidenfluorid oder besteht daraus.

Nach einer anderen bevorzugten Ausführungsform ist die ein- oder mehrschichtige UV-Stabilisatoren und/oder UV-Absorber enthaltende polymethylmethacrylathaltige Schutzschicht eine durch Beschichtungsauftrag erhaltene Schicht oder Folie, die vorzugsweise unter Mitverwendung mindestens eines organisch-chemischen Lösungsmittels in einer Schichtdicke von 5 bis 80 µm, vorzugsweise 8 bis 40 µm, aufgetragen ist.

Die coextrudierte oder mehrschichtige Schutzschicht oder Schutzfolie weist nach einer bevorzugten Ausführungsform mindestens eine untere polymethylmethacrylathaltige Schicht oder Folie, die vorzugsweise mindestens ein flexibilisierendes Acrylat oder Polyacrylat enthält, auf und besitzt mindestens eine polyvinylidenfluoridhaltige obere Schicht oder obere Folie.

Nach einer weiteren vorteilhaften Ausführung ist unterhalb der transparenten Schutzfolie oder Schutzschicht eine transparente Haftfolie, vorzugsweise eine mit der Oberfolie oder Oberschicht coextrudierte Haftfolie, angeordnet, die eine Legierung oder Mischung und/oder ein Co-, Ter- oder -Pfropfpolymerisat von einem Olefin bzw. Polyolefin, vorzugsweise Polyethylen und/oder Polypropylen mit einem Acrylester, vorzugsweise Methyl-, Ethyl-, Butylacrylester, und/oder Maleinsäureanhydrid und/oder mit einem Acrylathomo-, -co- und/oder -terpolymerisat und/oder ein Methacrylathomo-, -co- und/oder -terpolymerisat enthält oder daraus besteht.

Nach einer weiteren Ausführung ist unterhalb der vorzugsweise eine glatte Oberfläche aufweisenden Schutzfolie oder Schutzschicht eine transparente Haftschicht, die vorzugsweise unter Verwendung mindestens eines Löse- oder Verdünnungsmittels auf die Unterseite der Oberfolie oder Oberschicht aufgebracht ist (unter nachfolgender Verdunstung, Abdampfung oder Entfernung des Löse- oder Verdünnungsmittels oder eines erheblichen Anteils desselben), angeordnet, die ein thermoplastisches Acrylathomo-, -co- und/oder -terpolymerisat, vorzugsweise in Kombination mit einem Polyisocyanat, und/oder ein vernetzbares OH-gruppenhaltiges Acrylat, vorzugsweise in Kombination mit einem Polyisocyanat, und/oder ein Methacrylathomo-, -co- und/oder -terpolymerisat und/oder ein Polyisocyanat, vorzugsweise Hexamethylendiisocyanat, und/oder eine Legierung oder Mischung einer oder mehrerer dieser Verbindungen untereinander enthält oder daraus besteht.

Nach einer bevorzugten Ausführung ist auf der Oberseite der Unterschicht oder Unterfolie eine wasserunlösliche oder wasserschwerlösliche Kunststoff- oder Kunstharzhaftschicht oder -haftvermittlerschicht angeordnet, auf der sich ganzflächig oder teilflächig eine Druckschicht oder Farbdruckschicht befindet, die mindestens von einer weiteren, vorzugsweise wasserunlöslichen Kunstharzhaftschicht und/oder -haftvermittlerschicht bedeckt, beschichtet oder überzogen ist oder auf der Oberseite der Unterschicht oder Unterfolie ist die Druckschicht oder Farbdruckschicht, enthaltend ein Kunststoff- oder Kunstharzbindemittel, vorzugsweise ein wasserunlösliches Kunstharzbindemittel und/oder ein Isocyanat bzw. Isocyanatgruppen, vorzugsweise Polyisocyanat oder Polyisocyanate, enthaltendes oder daraus bestehendes Bindemittel, angeordnet.

Die polyolefinhaltige Unterfolie oder Unterschicht enthält nach einer bevorzugten Ausführungsform je 100 Gewichtsteile Polyolefin oder Polyolefinlegierung, vorzugsweise Propylenhomopolymerisat oder HDPE, 25 bis 120 Gewichtsteile eines feinteiligen mineralischen Füllstoffes oder mineralischen Füllstoffgemisches, vorzugsweise Calciumcarbonat, Erdalkalioxide, Mikrotalcum, Kaolin, Silicate, Magnesium-Aluminium-Oxy- oder -Hydroxy-Carbonate und/oder Silicate und/oder Kieselsäuregel mit einem mittleren Körnungsdurchmesser unter 10 µm, vorzugsweise von 0,05 bis 5 µm.

Nach einer anderen Ausführungsform enthält die polyolefinhaltige Unterfolie oder Unterschicht je 100 Gewichtsteile Polyolefin oder Polyolefinlegierung, vorzugsweise Propylenhomopolymerisat oder HDPE, 5 bis 40 Gewichtsteile (bezogen auf 100 Gewichtsteile Polyolefin), vorzugsweise 10 bis 30 Gewichtsteile, mindestens eines feinteiligen organischen Füllstoffes oder Kombinationen dieser Gewichtsmengen organischer Füllstoffe mit 0 bis 30 Gewichtsteilen, vorzugsweise 5 bis 25 Gewichtsteilen, mindestens eines feinteiligen mineralischen anorganischen Füllstoffes oder Füllstoffgemisches.

Die Schutzfolie oder Schutzschicht und die gegebenenfalls darunter angeordnete Haftfolie oder Haftschicht sind vorzugsweise durchsichtig oder transparent und enthalten keine Füllstoffe oder sehr feinteilige Füllstoffe in einer Gewichtsmenge von weniger als 3 Gew.-%, vorzugsweise weniger als 1,5 Gew.-%, bezogen auf das Gesamtgewicht der Oberfolie oder Oberschicht und/oder der darunter angeordneten Haftfolie oder Haftschicht.

Nach einer anderen bevorzugten Ausführungsform enthält die wasserlösliche Reaktantschicht als wasserlösliches Kunstharz ein wasserlösliches Acrylathomo-, -co-, -terpolymerisat und/oder ein wasserlösliches Methacrylathomo-, -co-, -terpolymerisat und/oder als Säure, Säureanhydrid oder sauer reagierende Verbindung mindestens eine wasserlösliche organische Di- und/oder Polycarbonsäure und/oder deren Anhydride, oder sauer reagierende Verbindung, vorzugsweise Maleinsäure, Maleinsäureanhydrid, eine wasserlösliche, ein Schwefelatom enthaltende organische Säure, eine Sulfonsäure, deren Derivate oder Ester, vorzugsweise Paratoluolsulfonsäure, und/oder eine Polysulfonsäure oder ein Gemisch von zwei oder mehreren dieser Verbindungen, oder besteht aus der Kombination eines oder mehrerer dieser wasserlöslichen Kunstharze und einer oder mehrerer dieser wasserlöslichen Säuren, Säureanhydride oder sauer reagierenden Verbindungen.

Die vorliegende Erfindung betrifft weiterhin ein Verfahren zur Herstellung einer mehrschichtigen Kunststoffverbundfolie enthaltend mindestens eine Unterschicht oder Unterfolie auf der Basis mindestens eines Polyolefins, mindestens eine unterhalb der Unterfolie oder Unterschicht angeordnete Haftschicht, Haftfolie, Haftvermittlerschicht und/oder Reaktantschicht und mindestens eine oberhalb der Unterschicht oder Unterfolie angeordnete obere Schicht oder Folie. Gemäß der Erfindung wird auf der 60 bis 700 µm dicken Polyolefin- oder polyolefinhaltigen Unterschicht oder Unterfolie, die, bezogen auf 100 Gewichtsteile Polyolefin, 5 bis 150 Gewichtsteile mindestens eines anorganisch-chemischen und/oder organisch-chemischen Füllstoffes, Pigmentes oder Füllstoff-Pigment-Gemisches und mindestens einen UV-Stabilisator enthält, mindestens eine Zwischenschicht in Form mindestens einer Primer-, Haftschicht oder Haftfolie und darüber mindestens eine vollflächig oder teilflächig angeordnete Druckschicht, Farbschicht oder Farbdruckschicht und unmittelbar darauf oder über eine oder mehrere Zwischenschichten mindestens eine polymethylmethacrylat-, polyamid- und/oder polyesterhaltige ein- oder mehrschichtige Schutzschicht oder Schutzfolie, die vorzugsweise mindestens einen UV-Absorber und/oder UV-Stabilisator in mindestens einer Schicht enthält, angeordnet, wobei die Vereinigung der Schutzfolie oder Schutzschicht mit der Unterfolie oder Unterschicht und gegebenenfalls einer oder mehrerer darüber oder dazwischen angeordneten Schicht(en) durch Kaschieren und/oder Prägen bei Temperaturen von 100 °C bis 160 °C oder durch Coextrusionsbeschichtung bei Temperaturen von 130 °C bis 230 °C durchgeführt wird und/oder die Schutzschicht durch Beschichtung, Lösungsmittelauftrag oder Lösungsmittelpolymerisation bei Temperaturen von 50 bis 160 °C, vorzugsweise 80 bis 120 °C, aufgebracht wird.

Nach einer bevorzugten Ausführungsform wird an der Unterseite der Unterfolie oder Unterschicht mindestens eine wasserlösliche, wasseranlösbare oder wasserunlösliche Haftschicht, Haftvermittlerschicht und/oder eine Reaktantschicht angeordnet, die im Fall der wasserlöslichen oder wasseranlösbaren Haft- oder Reaktantschicht neben einem Bindemittel ein mit der aufzubringenden Klebeschicht reagierendes Mittel oder ein wasserlösliches kationisches Polymeres, vorzugsweise Polyimin, enthält oder im Fall einer wasserunlöslichen oder wasserschwerlösliche Haftschicht oder Haftvermittlerschicht ein polare Gruppen enthaltendes wasserschwer- oder wasserunlösliches Kunstharz oder einen polare Gruppen enthaltenden Kunststoff, vorzugsweise mindestens ein Polyacrylat, Polyester, Polyurethan und/oder ein Polyisocyanat, enthält oder daraus besteht.

Die Schutzschicht oder Schutzfolie wird in einer Dicke von 5 bis 300 µm aufgebracht.

Nach einer weiteren bevorzugten Ausführungsform wird die Unterfolie oder Unterschicht durch Kalandrieren oder Extrudieren hergestellt, nachfolgend eine Haft- oder Primerschicht, die vorzugsweise als Lösungsmittel- oder Verdünnnungsmittelbeschichtung und/oder durch Rasterwalzen aufgetragen und auf mindestens einer Fläche der Unterfolie oder Unterschicht, vorzugsweise auf deren Oberfläche, angeordnet. Nach Trocknung oder Antrocknung der auf der Oberseite der Unterfolie oder Unterschicht angebrachten Haft- oder Primerschicht wird in mehreren Schichten bedruckt und unmittelbar darauf oder über eine Zwischenschicht die Schutzschicht aufgebracht oder aufgetragen.

Die erfindungsgemäße mehrschichtige Kunststoffverbundfolie wird vorzugsweise für die Beschichtung von Holz und Holzwerkstoffen, Türen und Fensterprofilen aus Holz oder Holzwerkstoffen, als Folie zur Herstellung oder Beschichtung von Möbeln oder Möbelteilen oder Werkstoffteilen zur Herstellung derselben (Möbelfolie) sowie zur Kaschierung von Spanplatten, Holzwerkstoffplatten und Holz verwendet.

Eine weitere bevorzugte Verwendung der mehrschichtigen Kunststoffverbundfolie erfolgt zur Beschichtung von Metallen, insbesondere Blechplatten, Blechprofilen oder Blechteilen und/oder zur Beschichtung von Kunststoffprofilen und Kunststoffteilen, vorzugsweise zur Beschichtung von Fensterprofilen und Profilen aus Kunststoff sowie als Dekorfolie.

Nach einer bevorzugten Ausführungsform besitzt der in der Unterschicht oder Unterfolie verwendete feinteilige mineralische Füllstoff oder das mineralische Füllstoffgemisch, vorzugsweise Calciumcarbonat, Mikrotalcum, Kaolin und/oder Kieselsäuregel, mindestens eine reaktive Substanz, wobei als reaktive Substanz mindestens eine polare und unpolare Gruppen aufweisende Substanz in Gewichtsmengen von 0,5 bis 10 Gew.-%, vorzugsweise 1 bis 5 Gew.-%, (bezogen auf 100 Gewichtsteile Füllstoff oder Füllstoffgemisch), die vorzugsweise auf der Oberfläche oder auf einem Teil der Oberfläche des Füllstoffes oder Füllstoffgemisches angeordnet ist.

Als reaktive oder polare Substanz bzw. Substanzen ist bzw. sind mindestens eine organisch-chemische Verbindung mit mindestens einer OH-Gruppe und/oder COOH-Gruppe und/oder SiOR oder SiOR-Gruppen oder ähnliche Polysiloxangruppen und mindestens einer oder mehreren unpolaren Gruppen an der Oberfläche des mineralischen Füllstoffes enthalten und/oder dieser ist damit in Form einer dünnen Schicht ganz oder teilweise überzogen, wobei vorzugsweise die polaren Gruppen zum Füllstoff orientiert sind.

Bevorzugt werden als polare und unpolare Gruppen aufweisende Verbindungen gesättigte und ungesättigte Carbonsäuren mit einer C-Zahl über 3, vorzugsweise über 10, Hydroxycarbonsäure, Polyoxycarbonsäuren mit einer C-Zahl über C₆, vorzugsweise über C₁₀, insbesondere Stearinsäure, Hydroxystearinsäure und Polysiloxane (z.B. Polydimethylsiloxan) oder Hydroxy- oder Amin-Gruppen aufweisende Polysiloxane oder eine oder mehrere Hydroxygruppen enthaltende Polysiloxane eingesetzt.

Wichtig ist, daß die polare und unpolare Gruppen aufweisenden Verbindungen nicht getrennt bei der Folienherstellung zugegeben werden, sondern mit dem Füllstoff oder dem Füllstoffgemisch, wobei sie auf der Oberfläche oder einem Teil der Oberfläche des Füllstoffes angeordnet sein müssen. Setzt man die polare und unpolare Gruppen aufweisenden Verbindungen getrennt bei der Folienherstellung zu, ohne daß sie auf der Oberfläche des Füllstoffes angeordnet sind, so besteht die Gefahr des Auftretens von Verarbeitungsschwierigkeiten oder der Herstellung von Folien verschlechterter Qualität.

Nach einer weiteren Ausführungsform enthält die Polyolefinfolie oder Polyolefinfolienbahn (Unterfolie oder Unterschicht) ein Gemisch oder eine Legierung aus 70 bis 97,5 Gewichtsteilen, vorzugsweise 75 bis 85 Gewichtsteilen, eines Propylenhomo- oder -copolymerisates, und 5 bis 30 Gewichtsteilen, vorzugsweise 15 bis 25 Gewichtsteilen, Niederdruckpolyethylen, Polyvinylalkohol, Ethylen-Vinylalkohol-Mischpolymerisat (Copolymerisat), Ethylen-Acrylsäureester-Acrylsäureterpolymerisat (EAA) oder Polycaprolacton oder Mischungen bzw. Legierungen von Niederdruckpolyethylen mit einem oder mehreren der vorgenannten Polymerisate, Co- oder Terpolymerisate.

Auf der Unterseite der Unterfolie, Unterschicht oder Polyolefinfolienbahn ist gemäß einer Ausführungsform als Haftschicht oder haftvermittelnde Schicht oder eine oder mehrere Komponenten eines Klebstoffs enthaltende Schicht mit einer mittleren Dicke von 1 bis 35 µm, vorzugsweise 2 bis 5 µm, angeordnet. Nach dieser Ausführungsform werden haftvermittelnde Polyurethanharze oder Zusätze von Isocyanaten und/oder Bindemittel, vorzugsweise ein wasserlösliches Bindemittel mit einer Härterkomponente des duromeren Klebstoffes, z.B. eine organische Säure in Kombination mit einem wasserlöslichen Acrylatharz, eingesetzt.

Als Härterkomponente werden die für den jeweiligen duromeren Klebstoff geeigneten Härter wie Sulfonsäure (Paratoluolsulfonsäure), Amine und dergleichen verwendet.

Nach einer bevorzugten Ausführungsform wird die Kunststoffverbundfolie während der Herstellung oder danach geprägt oder mindestens eine oder mehrere der oberen Schichten oder Folien der Verbundfolie und/oder die Schutzschicht oder Schutzfolie mit Prägungen versehen.

### Beispiele

### Beispiel 1

1. Unterfolie
   - 100 Gew.-Teile: Polypropylenhomopolymerisat MFi 1,8 230 °C, 21,6 N
   - 96 Gew.-Teile: feinteiliges oberflächenbehandeltes Calciumcarbonat mit einem mittleren Körnungsdurchmesser unter 4 µm
   - 4 Gew.-Teile: lichtstabile Pigmente
   - 0,5 Gew.-Teile: Verarbeitungshilfsmittel
   - 0,6 Gew.-Teile: Wärmestabilisatoren
   - 0,4 Gew.-Teile: UV-Stabilisator oder UV-Absorber, vorzugsweise sterisch gehindertes Amin
2. Zwischenschicht, die auf der Unterfolie angeordnet ist (Zwischenschicht zwischen Unterfolie und Farbdruckschicht in Form einer Haftschicht)
   - 20 Gew.-Teile: thermoplastisches Polymethylmethacrylat (berechnet als Feststoff)
   - 4 Gew.-Teile: Polyisocyanat (berechnet als Feststoff)
   - 38 Gew.-Teile: Methylethylketon (MEK)
   - 38 Gew.-Teile: Methylisobutylketon (MIBK)
3. Druckfarbe oder Druckschicht
   - 20 Gew.-Teile: Ethylmethacrylat
   - 15 Gew.-Teile: lichtstabile Pigmente
   - 40 Gew.-Teile: Methylethylketon (MEK)
   - 40 Gew.-Teile: Methylisobutylketon (MIBK)
4. Haftvermittelnde Zwischenschicht zwischen Druckschicht und Schutzschicht oder Schutzfolie
   - 25 Gew.-Teile: Methylmethacrylat (berechnet als Feststoff)
   - 37,5 Gew.-Teile: Methylethylketon (MEK)
   - 37,5 Gew.-Teile: Methylisobutylketon (MIBK)
5. Polymethylmethacrylat-Schutzfolie
   Die Schutzfolie bestand aus einer flexibilisierten extrudierten Polymethylmethacrylatfolie, die 0,5 Gew.-Teile eines monomerischen UV-Absorbers des Typs Hydroxybenzotriazol enthielt.
6. Reaktantschicht oder Haftvermittlerschicht, die unterhalb der Unterfolie angeordnet ist
   - 25 Gew.-Teile: wäßrige Acrylsäure oder wasserlösliches Acrylat oder Polyacrylat
   - 20 Gew.-Teile: Maleinsäureanhydrid
   - 5 Gew.-Teile: feinteiliges SiO₂
   - 50 Gew.-Teile: Wasser

### Beispiel 2

1. Unterfolie in Form einer kalandrierten Folie aus HDPE
   HDPE-Folie kalandriert 80 Gew.-Teile HDPE MFi 1,2 190 °C 21,6 N
   - 20 Gew.-Teile: α-Cellulose
   - 0,3 Gew.-Teile: Wärmestabilisatoren
   - 0,4 Gew.-Teile: sterisch gehindertes Amin
   - 10 Gew.-Teile: lichtstabile Pigmente
2. Zwischenschicht in Form einer Haftvermittlerschicht, die zwischen Unterfolie und Druckschicht angeordnet ist
   - 25 Gew.-Teile: hydroxylgruppenhaltiges Polyacrylat
   - 3 Gew.-Teile: Polyisocyanat (berechnet als Feststoff)
   - 36 Gew.-Teile: Methylethylketon (MEK)
   - 36 Gew.-Teile: Methylisobutylketon (MIBK)
3. Druckschicht oder Druckfarbe
   - 20 Gew.-Teile: Ethylmethacrylat
   - 15 Gew.-Teile: lichtstabile Pigmente
   - 40 Gew.-Teile: Methylethylketon (MEK)
   - 40 Gew.-Teile: Methylisobutylketon (MIBK)
5. Schutzfolie
   Die Schutzfolie bestand aus einer zweischichtigen coextrudierten Schutzfolie mit einer Polyvinylidenfluorid (PVDF)-Oberschicht von einer Dicke von 10 µm und einer Polymethylmethacrylatunterschicht von einer Dicke von 50 µm. Die Unterschicht oder Unterfolie enthielt zusätzlich 0,8 Gew.-Teile mindestens eines monomerischen UV-Absorbers des Typs Hydroxybenzotriazol.
6. Haftvermittlerschicht, unterhalb der Unterfolie angeordnet
   Die rückseitig angeordnete Haftvermittlerschicht bestand aus
   - 20 Gew.-Teilen: eines linearen Polyurethans (berechnet als Feststoff)
   - 5 Gew.-Teilen: eines Isocyanates bzw. Polyisocyanates
   - 37,5 Gew.-Teilen: Methylethylketon (MEK)
   - 37,5 Gew.-Teilen: Methylisobutylketon (MIBK)

### Zeichnungsbeschreibung

In den beigefügten Abbildungen sind mehrschichtige Kunststoffverbundfolien gemäß Beispiel 1 und 2 im Querschnitt schematisch dargestellt.

Dabei ist unterhalb der Unterfolie (1) eine Reaktantschicht oder Haftvermittlerschicht (6) angeordnet. Auf der oberen Seite der Unterfolie (1) ist als Zwischenschicht eine Haftschicht (2) angebracht, auf der die Farbdruckschicht (3) in Form vorzugsweise eines Mehrfarbdruckes aufgebracht ist. Die Farbdruckschicht (3) wird gemäß Beispiel 1 von einer weiteren Zwischenschicht, in Form einer haftvermittelnden Zwischenschicht (4), und einer Schutzfolie (gemäß Beispiel 1 einer Polymethylmethacrylat-Schutzfolie) überdeckt.

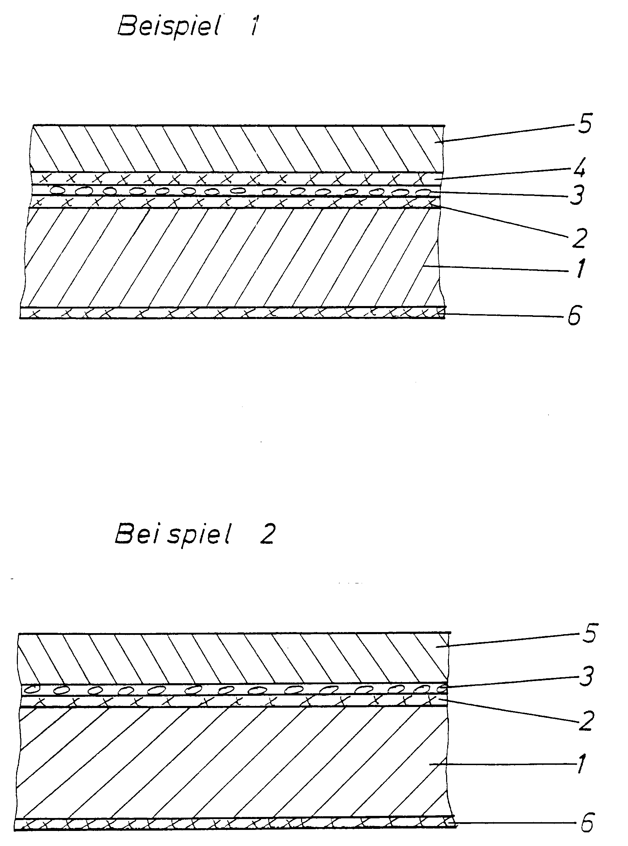

Bei dem Beispiel 2 ist unmittelbar über der Farbdruckschicht eine zweischichtige coextrudierte Schutzfolie dargestellt, wobei die zwei Schichten in der Zeichnung nicht wiedergegeben sind. Sie bestehen jedoch aus einer oberen Polyvinylidenfluorid-Oberschicht und einer darunter angeordneten Polymethacrylatunterschicht.

## Patentansprüche

1. Mehrschichtige Kunststoffverbundfolie enthaltend mindestens eine Unterschicht oder Unterfolie auf der Basis mindestens eines Polyolefins, mindestens eine unterhalb der Unterfolie oder Unterschicht angeordnete Haftschicht, Haftfolie, Haftvermittlerschicht und/oder Reaktantschicht und mindestens eine oberhalb der Unterschicht oder Unterfolie angeordnete obere Schicht oder Folie, dadurch gekennzeichnet, daß
1. auf der 60 bis 700 µm dicken Polyolefin- oder polyolefinhaltigen Unterschicht oder Unterfolie, die bezogen auf 100 Gewichtsteile Polyolefin 5 bis 150 Gewichtsteile mindestens eines anorganisch-chemischen und/oder organisch-chemischen Füllstoffes, Pigmentes oder Füllstoff-Pigment-Gemisches und mindestens einen UV-Stabilisator enthält, mindestens
2. eine Zwischenschicht in Form mindestens einer Primer-, Haftschicht oder Haftfolie und darüber
3. mindestens eine vollflächig oder teilflächig angeordnete Druckschicht, Farbschicht oder Farbdruckschicht und unmittelbar darauf oder über eine oder mehrere Zwischenschichten mindestens
4. eine polymethylmethacrylat-, polyamid- und/oder polyesterhaltige ein- oder mehrschichtige Schutzschicht oder Schutzfolie
angeordnet ist.

2. Kunststoffverbundfolie nach Anspruch 1, dadurch gekennzeichnet, daß an der Unterseite der Unterfolie oder Unterschicht mindestens eine wasserlösliche, wasseranlösbare oder wasserunlösliche Haftschicht, Haftvermittlerschicht und/oder eine Reaktantschicht angeordnet ist, die im Fall der wasserlöslichen oder wasseranlösbaren Haft- oder Reaktantschicht neben einem Bindemittel ein mit der aufzubringenden Klebeschicht reagierendes Mittel oder ein wasserlösliches kationisches Polymeres, vorzugsweise Polyimin, enthält oder im Fall einer wasserunlöslichen oder wasserschwerlöslichen Haftschicht oder Haftvermittlerschicht ein polare Gruppen enthaltendes wasserschwer- oder wasserunlösliches Kunstharz oder einen polare Gruppen enthaltenden Kunststoff, vorzugsweise mindestens ein Polyacrylat, Polyester, Polyurethan und/oder ein Polyisocyanat, enthält oder daraus besteht.

3. Kunststoffverbundfolie nach Ansprüchen 1 und 2, dadurch gekennzeichnet, daß die Schutzschicht oder Schutzfolie eine Dicke von 5 bis 300 µm aufweist, transparent und füllstofffrei oder füllstoffarm ist (Füllstoffgehalt unter 10 Gew.-%, vorzugsweise unter 5 Gew.-%, mit einem mittleren Körnungsdurchmesser unter 10 µm, vorzugsweise unter 5 µm).

4. Kunststoffverbundfolie nach einem oder mehreren der Ansprüche 1 bis 3, dadurch gekennzeichnet, daß über der Druckschicht, Farbschicht oder Farbdruckschicht und/oder unter der Schutzfolie oder Schutzschicht mindestens eine Haftschicht, Haftvermittlerschicht oder Haftfolie als Zwischenschicht angeordnet ist, die transparent und füllstoffarm (weniger als 3 Gew.-% Füllstoffe, vorzugsweise weniger als 1,5 Gew.-% Füllstoffe) oder füllstofffrei ist.

5. Kunststoffverbundfolie nach einem oder mehreren der Ansprüche 1 bis 4, dadurch gekennzeichnet, daß die unterhalb der Unterfolie oder Unterschicht angeordnete Reaktantschicht einen wasserlöslichen, wasserdispergierbaren oder wasseranlösbaren Kunststoff und mindestens eine wasserlösliche oder wasserdispergierbare reaktionsfähige Verbindung, vorzugsweise mindestens eine organisch-chemische Säure, ein Säureanhydrid und/oder eine sauer reagierende Verbindung, enthält.

6. Kunststoffverbundfolie nach einem oder mehreren der Ansprüche 1 bis 4, dadurch gekennzeichnet, daß die Haftschicht oder Haftvermittlerschicht, die unterhalb der Unterfolie oder Unterschicht angeordnet oder aufgebracht ist, eine wasserunlösliche Haftschicht ist und/oder durch ein Polyisocyanat ausgehärtet ist oder wird und/oder daß die Haftschicht oder Haftvermittlerschicht ein wasserlösliches kationisches Polymer oder Polymergemisch enthält oder daraus besteht.

7. Kunststoffverbundfolie nach einem oder mehreren der Ansprüche 1 bis 6, dadurch gekennzeichnet, daß die oberhalb der opaken Unterfolie oder Unterschicht der Kunststoffolie angeordnete Kunststoff- oder Kunstharzhaftschicht oder -haftvermittlerschicht ein thermoplastisches Acrylathomo-, -co- und/oder -terpolymerisat, vorzugsweise in Kombination mit einem Polyisocyanat, und/oder ein vernetzbares OH-gruppenhaltiges Acrylat, vorzugsweise in Kombination mit einem Polyisocyanat, und/oder ein Methacrylathomo-, -co- und/oder -terpolymerisat und/oder ein Polyisocyanat, vorzugsweise Hexamethylendiisocyanat, und/oder eine Legierung oder Mischung einer oder mehrerer dieser Verbindungen untereinander enthält oder daraus besteht.

8. Kunststoffverbundfolie nach einem oder mehreren der Ansprüche 1 bis 7, dadurch gekennzeichnet, daß die ein- oder mehrschichtige, UV-Stabilisatoren und/oder UV-Absorber enthaltende polymethylmethacrylat-, polyamid- und/oder polyesterhaltige Schutzschicht oder Schutzfolie eine durch Extrusion, Coextrusion oder durch Beschichtungsauftrag erhaltene Schicht oder Folie ist und/oder zusätzlich ein Fluorpolymerisat, ein Acrylat und/oder Polyacrylat und/oder eine die Schutzschicht oder Schutzfolie flexibilisierende organisch-chemische Verbindung oder ein flexibilisierendes Polymerisat enthält.

9. Kunststoffverbundfolie nach einem oder mehreren der Ansprüche 1 bis 8, dadurch gekennzeichnet, daß die extrudierte, coextrudierte oder mehrschichtige Schutzschicht oder Schutzfolie eine Dicke von 20 bis 350 µm, vorzugsweise 30 bis 250 µm, aufweist, einen UV-Absorbergehalt und/oder UV-Stabilisatorgehalt von 0,02 bis 15 Gew.-%, vorzugsweise 0,2 bis 5 Gew.-%, (bezogen auf 100 Gewichtssteile Polymer der Schutzschicht), besitzt und/oder mindestens ein flexibilisierendes Acrylat oder Polyacrylat und/oder Polyvinylidenfluorid enthält oder daraus besteht.

10. Kunststoffverbundfolie nach einem oder mehreren der Ansprüche 1 bis 8, dadurch gekennzeichnet, daß die ein- oder mehrschichtige, UV-Stabilisatoren und/oder UV-Absorber enthaltende polymethylmethacrylat-, polyamid- und/oder polyesterhaltige Schutzschicht eine durch Beschichtungsauftrag erhaltene Schicht oder Folie ist, die vorzugsweise unter Mitverwendung mindestens eines organisch-chemischen Lösungsmittels in einer Schichtdicke von 5 bis 80 µm, vorzugsweise 8 bis 40 µm, aufgetragen ist.

11. Kunststoffverbundfolie nach einem oder mehreren der Ansprüche 1 bis 8, dadurch gekennzeichnet, daß die coextrudierte oder mehrschichtige Schutzschicht oder Schutzfolie mindestens eine untere polymethylmethacrylathaltige Schicht oder Folie, die vorzugsweise mindestens ein flexibilisierendes Acrylat oder Polyacrylat enthält, besitzt und mindestens eine polyvinylidenfluoridhaltige obere Schicht oder obere Folie aufweist.

12. Kunststoffverbundfolie nach einem oder mehreren der Ansprüche 1 bis 11, dadurch gekennzeichnet, daß unterhalb der transparenten Schutzfolie oder Schutzschicht eine transparente Haftfolie, vorzugsweise eine mit der Oberfolie oder Oberschicht coextrudierte Haftfolie, angeordnet ist, die eine Legierung oder Mischung und/oder ein Co-, Ter- oder -Pfropfpolymerisat von einem Olefin bzw. Polyolefin, vorzugsweise Polyethylen und/oder Polypropylen mit einem Acrylester, vorzugsweise Methyl-, Ethyl-, Butylacrylester, und/oder Maleinsäureanhydrid und/oder mit einem Acrylathomo-, -co- und/oder -terpolymerisat und/oder ein Methacrylathomo-, -co- und/oder -terpolymerisat enthält oder daraus besteht.

13. Kunststoffverbundfolie nach einem oder mehreren der Ansprüche 1 bis 12, dadurch gekennzeichnet, daß unterhalb der vorzugsweise eine glatte Oberfläche aufweisenden Schutzfolie oder Schutzschicht eine transparente Haftschicht, die vorzugsweise unter Verwendung mindestens eines Löse- oder Verdünnungsmittels auf die Unterseite der Oberfolie oder Oberschicht aufgebracht ist, (unter nachfolgender Verdunstung, Abdampfung oder Entfernung des Löse- oder Verdünnungsmittels oder eines erheblichen Anteils desselben), angeordnet ist, die ein thermoplastisches Acrylathomo-, -co- und/oder und/oder -terpolymerisat, vorzugsweise in Kombination mit einem Polyisocyanat, und/oder ein vernetzbares OH-gruppenhaltiges Acrylat, vorzugsweise in Kombination mit einem Polyisocyanat, und/oder ein Methacrylathomo-, -co- und/oder -terpolymerisat und/oder ein Polyisocyanat, vorzugsweise Hexamethylendiisocyanat, und/oder eine Legierung oder Mischung einer oder mehrerer dieser Verbindungen untereinander enthält oder daraus besteht.

14. Kunststoffverbundfolie nach einem oder mehreren der Ansprüche 1 bis 13, dadurch gekennzeichnet, daß auf der Oberseite der Unterschicht oder Unterfolie eine wasserunlösliche oder schwerlösliche Kunststoff- oder Kunstharzhaftschicht oder -haftvermittlerschicht angeordnet ist, auf der sich ganzflächig oder teilflächig eine Druckschicht oder Farbdruckschicht befindet, die mindestens von einer weiteren, vorzugsweise wasserunlöslichen Kunstharzhaftschicht und/oder -haftvermittlerschicht bedeckt, beschichtet oder überzogen ist oder daß auf der Oberseite der Unterschicht oder Unterfolie die Druckschicht oder Farbdruckschicht, enthaltend ein Kunststoff- oder Kunstharzbindemittel, vorzugsweise ein wasserunlösliches Kunstharzbindemittel und/oder ein Isocyanat bzw. Isocyanatgruppen, vorzugsweise Polyisocyanat oder Polyisocyanate, enthaltendes oder daraus bestehendes Bindemittel, angeordnet ist.

15. Kunststoffverbundfolie nach einem oder mehreren der Ansprüche 1 bis 14, dadurch gekennzeichnet, daß die polyolefinhaltige Unterfolie oder Unterschicht je 100 Gewichtsteile Polyolefin oder Polyolefinlegierung, vorzugsweise Propylenhomopolymerisat oder HDPE, 25 bis 120 Gewichtsteile eines feinteiligen mineralischen Füllstoffes oder mineralischen Füllstoffgemisches, vorzugsweise Calciumcarbonat, Erdalkalioxide, Mikrotalcum, Kaolin, Silicate, Magnesium-Aluminium-Oxy- oder -Hydroxy-Carbonate und/oder -Silicate und/oder Kieselsäuregel mit einem mittleren Körnungsdurchmesser unter 10 µm, vorzugsweise von 0,05 bis 5 µm, enthält.

16. Kunststoffverbundfolie nach einem oder mehreren der Ansprüche 1 bis 14, dadurch gekennzeichnet, daß die polyolefinhaltige Unterfolie oder Unterschicht je 100 Gewichtsteile Polyolefin oder Polyolefinlegierung, vorzugsweise Propylenhomopolymerisat oder HDPE, 5 bis 40 Gewichtsteile (bezogen auf 100 Gewichtsteile Polyolefin), vorzugsweise 10 bis 30 Gewichtsteile, mindestens eines feinteiligen organischen Füllstoffes oder Kombinationen dieser Gewichtsmengen organischer Füllstoffe mit 0 bis 30 Gewichtsteilen, vorzugsweise 5 bis 25 Gewichtsteilen, mindestens eines feinteiligen mineralischen anorganischen Füllstoffes oder Füllstoffgemisches enthält.

17. Kunststoffverbundfolie nach einem oder mehreren der Ansprüche 1 bis 16, dadurch gekennzeichnet, daß die Schutzfolie oder Schutzschicht und die gegebenenfalls darunter angeordnete Haftfolie oder Haftschicht durchsichtig oder transparent ist und keine Füllstoffe oder sehr feinteilige Füllstoffe in einer Gewichtsmenge von weniger als 3 Gew.-%, vorzugsweise weniger als 1,5 Gew.-%, bezogen auf das Gesamtgewicht der Oberfolie oder Oberschicht und/oder der darunter angeordneten Haftfolie oder Haftschicht, enthalten.

18. Kunststoffverbundfolie nach einem oder mehreren der Ansprüche 1 bis 17, dadurch gekennzeichnet, daß die wasserlösliche Reaktantschicht als wasserlösliches Kunstharz ein wasserlösliches Acrylathomo-, -co-, -terpolymerisat und/oder ein wasserlösliches Methacrylathomo-, -co-, -terpolymerisat enthält oder das Bindemittel daraus besteht und/oder als Säure, Säureanhydrid oder sauer reagierende Verbindung mindestens eine wasserlösliche organische Di- und/oder Polycarbonsäure und/oder deren Anhydride, oder sauer reagierende Verbindung, vorzugsweise Maleinsäure, Maleinsäureanhydrid, eine wasserlösliche, ein Schwefelatom enthaltende organische Säure, eine Sulfonsäure, deren Derivate oder Ester, vorzugsweise Paratoluolsulfonsäure, und/oder eine Polysulfonsäure oder ein Gemisch von zwei oder mehreren dieser Verbindungen, enthält oder aus der Kombination eines oder mehrerer dieser wasserlöslichen Kunstharze und einer oder mehrerer dieser wasserlöslichen Säuren, Säureanhydride oder sauer reagierenden Verbindungen besteht.

19. Verfahren zur Herstellung einer mehrschichtigen Kunststoffverbundfolie enthaltend mindestens eine Unterschicht oder Unterfolie auf der Basis mindestens eines Polyolefins, mindestens eine unterhalb der Unterfolie oder Unterschicht angeordnete Haftschicht, Haftfolie, Haftvermittlerschicht und/oder Reaktantschicht und mindestens eine oberhalb der Unterschicht oder Unterfolie angeordnete obere Schicht oder Folie, dadurch gekennzeichnet, daß
1. auf der 60 bis 700 µm dicken Polyolefin- oder polyolefinhaltigen Unterschicht oder Unterfolie, die bezogen auf 100 Gewichtsteile Polyolefin 5 bis 150 Gewichtsteile mindestens eines anorganisch-chemischen und/oder organisch-chemischen Füllstoffes, Pigmentes oder Füllstoff-Pigment-Gemisches und mindestens einen UV-Stabilisator enthält, mindestens
2. eine Zwischenschicht in Form mindestens einer Primer-, Haftschicht oder Haftfolie und darüber
3. mindestens eine vollflächig oder teilflächig angeordnete Druckschicht, Farbschicht oder Farbdruckschicht und unmittelbar darauf oder über eine oder mehrere Zwischenschichten mindestens
4. eine polymethylmethacrylat-, polyamid- und/oder polyesterhaltige ein- oder mehrschichtige Schutzschicht oder Schutzfolie, die vorzugsweise mindestens einen UV-Absorber und/oder UV-Stabilisator in mindestens einer Schicht enthält,
angeordnet wird, wobei die Vereinigung der Schutzfolie oder Schutzschicht mit der Unterfolie oder Unterschicht und gegebenenfalls (einer) darüber oder dazwischen angeordneten Schicht(en) durch Kaschieren und/oder Prägen bei Temperaturen von 100 °C bis 160 °C oder durch Coextrusionsbeschichtung bei Temperaturen von 130 °C bis 230 °C durchgeführt wird und/oder die Schutzschicht durch Beschichtung, Lösungsmittelauftrag oder Lösungsmittelpolymerisation bei Temperaturen von 50 bis 160 °C, vorzugsweise 80 bis 120 °C, aufgebracht wird.

20. Verfahren nach Anspruch 19, dadurch gekennzeichnet, daß an der Unterseite der Unterfolie oder Unterschicht mindestens eine wasserlösliche, wasseranlösbare oder wasserunlösliche Haftschicht, Haftvermittlerschicht und/oder eine Reaktantschicht angeordnet wird, die im Fall der wasserlöslichen oder wasseranlösbaren Haft- oder Reaktantschicht neben einem Bindemittel ein mit der aufzubringenden Klebeschicht reagierendes Mittel oder ein wasserlösliches kationisches Polymeres, vorzugsweise Polyimin, enthält oder im Fall einer wasserunlöslichen oder wasserschwerlöslichen Haftschicht oder Haftvermittlerschicht ein polare Gruppen enthaltendes wasserschwer- oder wasserunlösliches Kunstharz oder einen polare Gruppen enthaltenden Kunststoff, vorzugsweise mindestens ein Polyacrylat, Polyester, Polyurethan und/oder ein Polyisocyanat, enthält oder daraus besteht.

21. Verfahren nach Anspruch 19 und 20, dadurch gekennzeichnet, daß die Schutzschicht oder Schutzfolie in einer Dicke von 5 bis 300 µm aufgebracht wird.

22. Verfahren nach einem oder mehreren der Ansprüche 19 bis 21, dadurch gekennzeichnet, daß die Unterfolie oder Unterschicht durch Kalandrieren oder Extrudieren hergestellt wird, daß nachfolgend eine Haft- oder Primerschicht, die vorzugsweise als Lösungsmittel- oder Verdünnungsmittelbeschichtung und/oder durch Rasterwalzen aufgetragen wird, auf mindestens einer Fläche der Unterfolie oder Unterschicht, vorzugsweise auf deren Oberfläche, angeordnet wird, daß nach Trocknung oder Antrocknung auf der Oberseite der Unterfolie oder Unterschicht angebrachte Haft- oder Primerschicht in mehreren Schichten bedruckt und unmittelbar darauf oder über eine Zwischenschicht die Schutzschicht aufgebracht wird.

23. Verfaren nach einem oder mehreren der Ansprüche 19 bis 22, dadurch gekennzeichnet, daß die Verbundfolie oder die obere Schicht, Schichten oder Schutzfolie geprägt wird.

24. Verwendung einer mehrschichtigen Kunststoffverbundfolie nach einem oder mehreren der Ansprüche 1 bis 23 für die Beschichtung von Holz und Holzwerkstoffen, Türen und Fensterprofilen aus Holz oder Holzwerkstoffen, als Folie zur Herstellung oder Beschichtung von Möbeln oder Möbelteilen oder Werkstoffteilen zur Herstellung derselben (Möbelfolie) sowie zur Kaschierung von Spanplatten, Holzwerkstoffplatten und Holz.

25. Verwendung einer mehrschichtigen Kunststoffverbundfolie nach einem oder mehreren der Ansprüche 1 bis 23 zur Beschichtung von Metallen, insbesondere Blechplatten, Blechprofilen oder Blechteilen und/oder zur Beschichtung von Kunststoffprofilen und Kunststoffteilen, vorzugsweise zur Beschichtung von Fensterprofilen und Profilen aus Kunststoff.

## Claims

1. A multi-layered plastic composite foil containing at least one lower layer or lower foil based on at least one polyolefin, at least one adhesive layer, adhesive foil, adhesive agent layer and/or reactant layer arranged beneath the lower foil or lower layer, and at least one upper layer or foil arranged above the lower layer or lower foil, characterised in that
1. on the lower layer or lower foil of polyelofin or containing polyolefin, 60 to 700 µm thick, which contains, in relation to 100 parts by weight polyolefin, 5 to 150 parts by weight of at least one inorganic chemical and/or organic chemical filler, pigment or filler/pigment mixture and at least one UV stabiliser, at least
2. one intermediate layer in the form of at least one primer-, adhesive layer or adhesive foil and thereabove
3. at least one printed layer, coloured layer or colour printed layer, arranged over the entire surface of over part of the surface, and immediately thereon or over one or more intermediate layers at least
4. one protective layer or protective foil containing polymethylmethacrylate, polyamide and/or polyester, having one or several layers
is arranged.

2. A plastic composite foil according to Claim 1, characterised in that on the underside of the lower foil or lower layer, at least one adhesive layer, adhesive agent layer and/or a reactant layer is arranged which is soluble in water, soluble on contact with water or is insoluble in water and which in the case of the adhesive or reactant layer which is soluble in water or soluble on contact with water, in addition to a binding agent contains an agent reacting with the adhesive layer which is to be applied or contains a water-soluble cationic polymer, preferably polyimine, or in the case of an adhesive layer or adhesive agentlayer which is insoluble in water or is difficultly soluble in water, contains or consists of a synthetic resin, containing polar groups, which is difficultly soluble or insoluble in water, or contains or consists of a plastic containing polar groups, preferably at least one polyacrylate, polyester, polyurethane and/or polyisocyanate.

3. A plastic composite foil according to Claims 1 and 2, characterised in that the protective layer or protective foil has a thickness of 5 to 300 µm, is transparent and free of filler or has a low proportion of filler (filler content below 10 % by weight, preferably below 5% by weight, with a mean grain diameter below 10 µm, preferably below 5 µm).

4. A plastic composite foil according to one or more of Claims 1 to 3, characterised in that over the printed layer, coloured layer or colour-printed layer and/or beneath the protective foil or protective layer at least one adhesive layer, adhesive agent layer or adhesive foil is arranged as intermediate layer, which is transparent and has a low proportion of filler (less than 3 % by weight fillers, preferably less than 1.5 % by weight fillers) or is free of filler.

5. A plastic composite foil according to one or more of Claims 1 to 4, charcterised in that the reactant layer arranged beneath the lower foil or lower layer contains a plastic which is soluble in water, is dispersable in water or is soluble on contact with water, and also contains at least one reactive compound, soluble in water or dispersable in water, preferably at least one organic chemical acid, an acid anhydride and/or an acid-reacting compound.

6. A plastic composite foil according to one or more of Claims 1 to 4, characterised in that the adhesive layer or adhesive agent layer, which is arranged or applied beneath the lower foil or lower layer, is an adhesive layer which is insoluble in water and/or is or becomes hardened by a polyisocyanate and/or in that the adhesive layer or adhesive agent layer contains or consists of a cationic polymer or polymer mixture which is soluble in water.

7. A plastic composite foil according to one or more of Claims 1 to 6, characterised in that the plastic- or synthetic resin adhesive layer or -adhesive agent layer arranged above the opaque lower foil or lower layer of the plastic foil contains or consists of a thermoplastic acrylate homo-, -co- and/or -terpolymeride, preferably in combination with a polyisocyanate, and/or an acrylate able to be cross-linked and containing OH groups, preferably in combination with a polyisocyanate, and/or a methacrylate homo-, -co- and/or terpolymeride and/or a polyisocyanate, preferably hexamethylene diisocyanate, and/or an alloy or mixture of one or more of these compounds with each other.

8. A plastic composite foil according to one or more of Claims 1 to 7, characterised in that the single- or multilayered protective layer or protective foil containing UV stabilisers and/or UV absorbers and containing polymethacrylate, polyamide and/or polyester, is a layer or foil obtained by extrusion, coextrusion or by the application of a coating, and/or additionally contains a fluoropolymeride, an acrylate and/or polyacrylate and/or an organic chemical compound flexibilising the protective layer or protective foil or a flexibilising polymeride.

9. A plastic composite foil according to one or more of Claims 1 to 8, characterised in that the extruded, coextruded or multilayered protective layer or protective foil has a thickness of 20 to 350 µm, preferably 30 to 250 µm, possesses a UV absorber content and/or UV stabiliser content of 0.02 to 15 % by weight, preferably 0.2 to 5 % by weight (in relation to 100 parts by weight polymer of the protective layer) and/or contains or consists of at least one flexiblising acrylate or polyacrylate and/or polyvinylidene fluoride.

10. A plastic composite foil according to one or more of Claims 1 to 8, charcterised in that the single- or multi-layered protective layer containing UV stabilisers and/or UV absorbers, and containing polymethylmethacrylate, polyamide and/or polyester, is a layer or foil obtained by the application of a coating, which is preferably applied with the additional use of at least one organic chemical solvent in a layer thickness of 5 to 80 µm, preferably 8 to 40 µm.

11. A plastic composite foil according to one or more of Claims 1 to 8, characterised in that the coextruded or multi-layered protective layer or protective foil has at least one lower layer or foil containing polymethylmethacrylate, which preferably contains at least one flexibilising acrylate or polyacrylate, and has at least one upper layer or upper foil containing polyvinylidene fluoride.

12. A plastic composite foil according to one or more of Claims 1 to 11, characterised in that beneath the transparent protective foil or protective layer, a transparent adhesive foil is arranged, preferably an adhesive foil which is coextruded with the upper foil or upper layer, which foil contains or consists of an alloy or mixture and/or a co-, ter- or graft polymeride of an olefin or polyolefin, preferably polyethylene and/or polypropylene with an acrylic ester, preferably methyl-, ethyl-, butyl acrylic ester, and or maleic acid anhydride and/or with an acrylate homo-, -co- and/or -terpolymeride and/or a methacrylate homo-, -co- and/or -terpolymeride.

13. A plastic composite foil according to one or more of Claims 1 to 12, characterised in that beneath the protective foil or protective layer, which preferably has a smooth surface, a transparent adhesive layer is arranged, which is preferably applied with the use of at least one solvent or thinning agent onto the underside of the upper foil or upper layer, (with subsequent evaporation, volatilization or removal of the solvent or thinning agent or of a considerable proportion thereof), which contains or consists of a thermoplastic acrylate homo-, -co- and/or -terpolymeride, preferably in combination with a polyisocyanate, and/or an acrylate containing OH groups and which is able to be cross-linked, preferably in combination with a polyisocyanate, and/or a methacrylate homo-, -co- and/or -terpolymeride and/or a polyisocyanate, preferably hexamethylene diisocyanate, and/or an alloy or mixture of one or more of these compounds with each other.

14. A plastic composite foil according to one or more of Claims 1 to 13, characterised in that on the upper side of the lower layer or lower foil, a plastic-or synthetic resin adhesive layer or -adhesive agent layer is arranged which is insoluble in water or is difficultly soluble, on which over the entire surface or over part of the surface a printed layer or colour-printed layer is situated, which is capped, coated or covered by at least one further, preferably water-insoluble, synthetic resin adhesive layer and/or - adhesive agent layer, or that on the upper side of the lower layer or lower foil, the printed layer or colour-printed layer, containing a plastic- or synthetic resin binding agent, preferably a water-insoluble synthetic resin binding agent and/or a binding agent containing or consisting of an isocyanate or isocyanate groups, preferably polyisocyanate or polyisocyanates, is arranged.

15. A plastic composite foil according to one or more of Claims 1 to 14, characterised in that the lower foil or lower layer, containing polyolefin, contains for every 100 parts by weight polyolefin or polyolefin alloy, preferably propylene homopolymeride or HDPE, 25 to 120 parts by weight of a fine-particulate mineral filler or mineral filler mixture, preferably calcium carbonate, alkaline earth oxides, microtalcum, kaolin, silicates, magnesium-aluminium-oxy- or -hydroxy--carbonates and/or -silicates and/or silica gel with a mean grain diameter below 10 µm, preferably from 0.05 to 5 µm.

16. A plastic composite foil according to one or more of Claims 1 to 14, characterised in that the lower foil or lower layer, containing polyolefin, contains for every 100 parts by weight of polyolefin or polyolefin alloy, preferably propylene homopolymeride or HDPE, 5 to 40 parts by weight (in relation to 100 parts by weight polyolefin), preferably 10 to 30 parts by weight, at least of a fine-particulate organic filler or combination of these weight quantities of organic fillers with 0 to 30 parts by weight, preferably 5 to 25 parts by weight, at least of a fine-particulate mineral inorganic filler or filler mixture.

17. A plastic composite foil according to one or more of Claims 1 to 16, characterised in that the protective foil or protective layer and the adhesive foil or adhesive layer which may be arranged therebeneath, is clear or transparent and contain no fillers or very fine-particulate fillers in a weight quantity of less than 3 % by weight, preferably less than 1.5 % by weight, in relation to the total weight of the upper foil or upper layer and/or of the adhesive foil or adhesive layer arranged therebeneath.

18. A plastic composite foil according to one or more of Claims 1 to 17, characterised in that the water-soluble reactant layer contains as water-soluble synthetic resin a water-soluble acrylate homo-, -co-, -terpolymeride and/or a water-soluble methacrylate homo-, -co-, -terpolymeride or the binding agent consists thereof and/or contains as acid, acid anhydride or acid-reacting compound at least one water-soluble organic di- and/or polycarbonic acid and/or its anhydrides, or acid-reacting compound, preferably maleic acid, maleic acid anhydride, a water-soluble organic acid containing one sulphur atom, a sulphonic acid, its derivatives or esters, preferably paratoluene sulphonic acid, and/or a polysulphonic acid or a mixture of two or more of these compounds, or consists of the combination of one or more of these water-soluble synthetic resins and one or more of these water-soluble acids, acid anhydrides or acid-reacting compounds.

19. A method for the production of a multi-layered plastic composite foil containing at least one lower layer or lower foil based on at least one polyolefin, at least one adhesive layer, adhesive foil, adhesive agent layer and/or reactant layer arranged beneath the lower foil or lower layer, and at least one upper layer or foil arranged above the lower layer or lower foil, characterised in that
1. on the lower layer or lower foil of polyolefin or containing polyolefin, 60 to 700 µm thick, which in relation to 100 parts by weight of polyolefin contains 5 to 150 parts by weight of at least one inorganic chemical and/or organic chemical filler, pigment or filler/pigment mixture and at least one UV stabiliser, at least
2. one intermediate layer in the form of at least one primer-, adhesive layer or adhesive foil and thereabove
3. at least one printed layer, coloured layer or colour-printed layer, arranged over the entire surface or over part of the surface, and immediately thereabove or over one or more intermediate layers at least
4. one single- or multilayered protective layer or protective foil containing polymethylmethacrylate, polyamide and/or polyester, which preferably contains at least one UV absorber and/or UV stabiliser in at least one layer,
is arranged, in which the combination of the protective foil or protective layer with the lower foil or lower layer and, if applicable of (a) layer(s) arranged thereabove or therebetween is carried out by laminating and/or stamping at temperatures from 100 °C to 160 °C or by coextrusion coating at temperatures from 130 °C to 230 °C, and/or the protective layer is applied by coating, the application of solvent or solvent polymersiation at temperatures from 50 to 160 °C, preferably 80 to 120 °C.

20. A method according to Claim 19, characterised in that on the underside of the lower foil or lower layer, at least one adhesive layer, adhesive agent layer and/or a reactant layer is arranged which is soluble in water, is soluble in contact with water or is insoluble in water and which in the case of the adhesive- or reactant layer soluble in water or soluble in contact with water, contains in addition to a binding agent, an agent reacting with the adhesive layer which is to be applied, or a water-soluble cationic polymer, preferably polyimine, or in the case of an adhesive layer or adhesive agent layer which is insoluble or difficultly soluble in water, contains or consists of a synthetic resin containing polar groups and difficultly soluble in water or insoluble in water, or a plastic containing polar groups, preferably at least one polyacrylate, polyester, polyurethane and/or a polyisocyanate.

21. A method according to Claim 19 and 20, characterised in that the protective layer or protective foil is applied in a thickness of 5 to 300 µm.

22. A method according to one or more of Claims 19 to 21, characterised in that the lower foil or lower layer is produced by calandering or extruding, that subsequently an adhesive- or primer layer, which is preferably applied as a solvent- or thinning agent coating and/or by screen rolling, is arranged on at least one surface of the lower foil or lower layer, preferably on its upper surface, that after drying or surface drying, adhesive- or primer layer applied on the upper side of the lower foil or lower layer is printed on in several layers and immediately thereon or over an intermediate layer, the protective layer is applied.

23. A method according to one or more of Claims 19 to 22, characterised in that the composite foil or the upper layer, layers or protective foil is stamped.

24. The use of a multi-layered plastic composite foil according to one or more of Claims 1 to 23 for the, coating of wood and wood materials, doors and window sections of wood or wood materials, as a foil for the production or coating of furniture or parts of furniture or material parts for the production thereof (furniture foil) and also for the laminating of chip panels, wood material panels and wood.

25. The use of a multi-layered plastic composite foil according to one or more of Claims 1 to 23 for the coating of metals, in particular sheet metal panels, sheet metal sections or sheet metal parts and/or for the coating of plastic sections and plastic parts, preferably for the coating of window sections and sections of plastic.

## Revendications

1. Film plastique stratifié à plusieurs couches contenant au moins une sous-couche ou un sous-film à base d'au moins une polyoléfine, au moins une couche d'adhérence, un film d'adhérence, une couche d'agent adhérant et/ou une couche de réactif disposé(e) en dessous du sous-film ou de la sous-couche, et au moins une couche ou un film supérieur(e) disposé(e) au-dessus de la sous-couche ou du sous-film, caractérisé en ce que
1. sur la sous-couche ou sur le sous-film de polyoléfine ou contenant des polyoléfines d'une épaisseur de 60 à 700 µm, qui contient par rapport à 100 parts en poids de polyoléfine, 5 à 150 parts en poids d'au moins une matière de charge, d'un pigment ou d'un mélange de matière de charge et de pigment inorganiques et/ou organiques et d'au moins un stabilisateur UV, est disposée au moins
2. une couche intermédiaire sous forme d'au moins une couche d'apprêt, d'adhérence ou un film d'adhérence et sur celle-ci
3. au moins une couche d'impression, une couche de couleur ou une couche d'impression en couleur, disposée sur la surface totale ou sur une partie de celle-ci, et immédiatement sur celle-ci ou au-dessus d'une ou de plusieurs couches intermédiaires au moins
4. une couche de protection ou un film de protection à une ou à plusieurs couches, contenant un polyméthacrylate de méthyle, un polyamide et/ou un polyester.

2. Film plastique stratifié selon la revendication 1, caractérisé en ce qu'est disposée sur la face inférieure du sous-film ou de la sous-couche, au moins une couche d'adhérence, une couche d'agent adhérant et/ou une couche de réactif, soluble dans l'eau, soluble superficiellement dans l'eau ou insoluble dans l'eau, qui contient, dans le cas de la couche d'adhérence ou de réactif soluble dans l'eau ou soluble superficiellement dans l'eau, outre un agent liant, un agent réagissant avec la couche de colle à appliquer ou un polymère cationique soluble dans l'eau, de préférence une polyimine, ou qui contient ou est constituée, dans le cas d'une couche d'adhérence ou d'une couche d'agent adhérant insoluble dans l'eau ou difficilement soluble dans l'eau, d'une résine synthétique difficilement soluble dans l'eau ou insoluble dans l'eau, contenant des groupes polaires ou d'une matière synthétique contenant des groupes polaires, de préférence au moins un polyacrylate, un polyester, un polyuréthanne et/ou un polyisocyanate.

3. Film plastique stratifié selon les revendications 1 et 2, caractérisé en ce que la couche de protection ou le film de protection présente une épaisseur de 5 à 300 µm, est transparent(e) et exempt(e) de matières de charge ou pauvre en matières de charge (teneur en matières de charge inférieure à 10 % en poids, de préférence inférieure à 5 % en poids, avec une granulométrie moyenne inférieure à 10 µm, de préférence inférieure à 5 µm).

4. Film plastique stratifié selon une ou plusieurs des revendications 1 à 3, caractérisé en ce que au-dessus de la couche d'impression, de la couche de couleur ou de la couche d'impression en couleur et/ou en dessous du film de protection ou de la couche de protection est disposé(e) au moins une couche d'adhérence, une couche d'agent adhérant ou un film d'adhérence à titre de couche intermédiaire, qui est transparente et pauvre en matières de charge (moins de 3 % en poids de matières de charge, de préférence moins de 1,5 % en poids de matières de charge) ou exempte de matières de charge.

5. Film plastique stratifié selon une ou plusieurs des revendications 1 à 4, caractérisé en ce que la couche de réactif disposée en dessous du sous-film ou de la sous-couche contient une matière synthétique soluble dans l'eau, dispersible dans l'eau ou soluble superficiellement dans l'eau et au moins un composé réactionnel soluble dans l'eau ou dispersible dans l'eau, de préférence au moins un acide organique, un anhydride d'acide et/ou un composé réagissant de manière acide.

6. Film plastique stratifié selon une ou plusieurs des revendications 1 à 4, caractérisé en ce que la couche d'adhérence ou la couche d'agent adhérant, qui est disposée ou appliquée en dessous du sous-film ou de la sous-couche, est une couche d'adhérence insoluble dans l'eau et/ou est ou sera durcie par un polyisocyanate et/ou en ce que la couche d'adhérence ou la couche d'agent adhérant contient ou est constituée d'un polymère ou d'un mélange de polymères cationiques solubles dans l'eau.

7. Film plastique stratifié selon une ou plusieurs des revendications 1 à 6, caractérisé en ce que la couche d'adhérence ou la couche d'agent adhérant en matière synthétique ou en résine synthétique disposée au-dessus du sous-film ou de la sous-couche opaque du film plastique contient ou est constituée d'un homopolymère, copolymère et/ou terpolymère d'acrylate thermoplastique, de préférence en combinaison avec un polyisocyanate, et/ou d'un acrylate réticulable contenant des groupes OH, de préférence en combinaison avec un polyisocyanate, et/ou d'un homopolymère, copolymère et/ou terpolymère de méthacrylate, et/ou d'un polyisocyanate, de préférence le diisocyanate d'hexaméthylène, et/ou d'un alliage ou mélange mutuel d'un ou de plusieurs de ces composés.

8. Film plastique stratifié selon une ou plusieurs des revendications 1 à 7, caractérisé en ce que la couche de protection ou le film de protection, à une ou à plusieurs couches, contenant du polyméthacrylate de méthyle, du polyamide et/ou du polyester, contenant des stabilisateurs UV et/ou des absorbeurs d'UV, est une couche ou un film obtenu(e) par extrusion, par co-extrusion ou par application d'un revêtement, et/ou contient en outre un polymère fluoré, un acrylate et/ou un polyacrylate et/ou un composé organique flexibilisant la couche de protection ou le film de protection ou un polymère de flexibilisation.

9. Film plastique stratifié selon une ou plusieurs des revendications 1 à 8, caractérisé en ce que la couche de protection ou le film de protection extrudé(e), co-extrudé(e) ou à plusieurs couches présente une épaisseur de 20 à 350 µm, de préférence de 30 à 250 µm, présente une teneur en absorbeur d'UV et/ou une teneur en stabilisateur UV de 0,02 à 15 % en poids, de préférence de 0,2 à 5 % en poids (par rapport à 100 parts en poids de polymère de la couche de protection), et/ou contient ou est constitué(e) d'au moins un acrylate ou polyacrylate et/ou fluorure de polyvinylidène de flexibilisation.

10. Film plastique stratifié selon une ou plusieurs des revendications 1 à 8, caractérisé en ce que la couche de protection à une ou à plusieurs couches, contenant du méthacrylate de polyméthyle, du polyamide et/ou du polyester contenant des stabilisateurs UV et/ou des absorbeurs d'UV, est une couche ou un film obtenu(e) par application d'un revêtement, qui est appliqué(e) de préférence en utilisant conjointement au moins un solvant organique, en une épaisseur de couche de 5 à 80 µm, de préférence de 8 à 40 µm.

11. Film plastique stratifié selon une ou plusieurs des revendications 1 à 8, caractérisé en ce que la couche de protection ou le film de protection co-extrudé(e) ou à plusieurs couches présente au moins une couche ou film inférieur(e) contenant du polyméthacrylate de méthyle, qui contient de préférence au moins un acrylate ou un polyacrylate de flexibilisation et qui présente au moins une couche supérieure ou un film supérieur contenant du fluorure de polyvinylidène.

12. Film plastique stratifié selon une ou plusieurs des revendications 1 à 11, caractérisé en ce qu'est disposé en dessous du film de protection ou de la couche de protection transparent(e), un film d'adhérence transparent, de préférence un film d'adhérence, co-extrudé avec le film supérieur ou la couche supérieure, qui contient ou est constitué d'un alliage ou d'un mélange et/ou d'un copolymère, d'un terpolymère ou d'un polymère greffé d'une oléfine, respectivement d'une polyoléfine, de préférence de polyéthylène et/ou de polypropylène, avec un ester acrylique, de préférence l'ester méthyl-, éthyl-, butylacrylique et/ou l'anhydride maléique et/ou avec un homopolymère, copolymère et/ou terpolymère d'acrylate et/ou un homopolymère, copolymère et/ou terpolymère de méthacrylate.

13. Film plastique stratifié selon une ou plusieurs des revendications 1 à 12, caractérisé en ce que en dessous du film de protection ou de la couche de protection présentant de préférence une surface lisse est disposée une couche d'adhérence transparente qui est appliquée, de préférence en utilisant au moins un solvant ou un diluant, sur la face inférieure du film supérieur ou de la couche supérieure (par évaporation, par réduction ou par élimination subséquente du solvant ou du diluant ou d'une fraction substantielle de celui-ci), qui contient ou est constituée d'un homopolymère, copolymère et/ou terpolymère d'acrylate thermoplastique, de préférence en combinaison avec un polyisocyanate, et/ou d'un acrylate réticulable contenant des groupes OH, de préférence en combinaison avec un polyisocyanate, et/ou d'un homopolymère, copolymère et/ou terpolymère de méthacrylate et/ou d'un polyisocyanate, de préférence du diisocyanate d'hexaméthylène, et/ou d'un alliage ou d'un mélange mutuel d'un ou de plusieurs de ces composés.

14. Film plastique stratifié selon une ou plusieurs des revendications 1 à 13, caractérisé en ce que sur la face supérieure de la sous-couche ou du sous-film est disposée une couche d'adhérence ou une couche d'agent adhérant en matière synthétique ou en résine synthétique, insoluble dans l'eau ou difficilement soluble, sur laquelle se trouve une couche d'impression ou une couche d'impression en couleur sur la surface totale ou sur une partie de celle-ci, qui est recouverte, plaquée ou revêtue d'au moins une couche d'adhérence et/ou une couche d'agent adhérant en résine synthétique supplémentaire, de préférence insoluble dans l'eau, ou en ce que sur la face supérieure de la sous-couche ou du sous-film est disposée la couche d'impression ou la couche d'impression en couleur contenant un agent liant en matière synthétique ou en résine synthétique, de préférence un agent liant en matière synthétique insoluble dans l'eau et/ou un agent liant contenant ou étant constitué d'un isocyanate respectivement de groupes isocyanates, de préférence un polyisocyanate ou des polyisocyanates.

15. Film plastique stratifié selon une ou plusieurs des revendications 1 à 14, caractérisé en ce que le sous-film ou la sous-couche contenant des polyoléfines contient par 100 parts en poids de polyoléfine ou d'alliage de polyoléfines, de préférence un homopolymère de propylène ou du HDPE, 25 à 120 parts en poids d'une matière de charge minérale ou d'un mélange de matières de charge minérales à fines particules, de préférence du carbonate de calcium, des oxydes de métaux alcalino-terreux, du microtalc, du kaolin, des silicates, des oxy-ou des hydroxycarbonates et/ou -silicates de magnésium-aluminium et/ou du gel de silice avec une granulométrie moyenne inférieure à 10 µm, de préférence de 0,05 à 5 µm.

16. Film plastique stratifié selon une ou plusieurs des revendications 1 à 14, caractérisé en ce que le sous-film ou la sous-couche contenant des polyoléfines contient par 100 parts en poids de polyoléfine ou d'alliage de polyoléfines, de préférence un homopolymère de propylène ou du HDPE, 5 à 40 parts en poids (par rapport à 100 parts en poids de polyoléfine), de préférence 10 à 30 parts en poids, au moins une matière de charge organique à fines particules, ou des combinaisons de ces quantités pondérales de matières de charge organiques avec 0 à 30 parts en poids, de préférence 5 à 25 parts en poids, d'au moins une matière de charge ou d'un mélange de matières de charge minérales inorganiques à fines particules.

17. Film plastique stratifié selon une ou plusieurs des revendications 1 à 16, caractérisé en ce que le film de protection ou la couche de protection et le film d'adhérence ou la couche d'adhérence éventuellement disposé(e) en dessous est limpide ou transparent(e) et ne contiennent pas de matières de charge ou de matières de charge à très fines particules en une quantité pondérale inférieure à 3 % en poids, de préférence inférieure à 1,5 % en poids, par rapport au poids total du film supérieur ou de la couche supérieure et/ou du film d'adhérence ou de la couche d'adhérence disposé(e) en dessous.

18. Film plastique stratifié selon une ou plusieurs des revendications 1 à 17, caractérisé en ce que la couche de réactif soluble dans l'eau à titre de résine synthétique soluble dans l'eau contient un homopolymère, copolymère, terpolymère d'acrylate soluble dans l'eau et/ou un homopolymère, copolymère, terpolymère de méthacrylate soluble dans l'eau ou en ce que l'agent liant en est constitué, et/ou contient à titre d'acide, d'anhydride d'acide ou de composé réagissant de manière acide, au moins un acide di- et/ou polycarboxylique organique soluble dans l'eau et/ou leurs anhydrides, ou un composé réagissant de manière acide, de préférence l'acide maléique, l'anhydride maléique, un acide organique soluble dans l'eau contenant un atome de soufre, un acide sulfonique, leurs dérivés ou leurs esters, de préférence l'acide para-toluènesulfonique et/ou un acide polysulfonique ou un mélange de deux ou de plusieurs de ces composés, ou qu'elle est constituée de la combinaison d'une ou de plusieurs de ces résines synthétiques solubles dans l'eau et d'un ou de plusieurs de ces acides, anhydrides d'acide ou composés réagissant de manière acide, solubles dans l'eau.

19. Procédé de préparation d'un film plastique stratifié à plusieurs couches contenant au moins une sous-couche ou un sous-film à base d'au moins une polyoléfine, au moins une couche d'adhérence, un film d'adhérence, une couche d'agent adhérant et/ou une couche de réactif disposé(e) en dessous du sous-film ou de la sous-couche, et au moins une couche ou un film supérieur(e) disposé(e) au-dessus de la sous-couche ou du sous-film, caractérisé en ce que
1. sur la sous-couche ou sur le sous-film de polyoléfine ou contenant des polyoléfines d'une épaisseur de 60 à 700 µm, qui contient par rapport à 100 parts en poids de polyoléfine, 5 à 150 parts en poids d'au moins une matière de charge, d'un pigment ou d'un mélange de matière de charge et de pigment inorganiques et/ou organiques et d'au moins un stabilisateur UV, est disposée au moins
2. une couche intermédiaire sous forme d'au moins une couche d'apprêt, d'adhérence ou un film d'adhérence et sur celle-ci
3. au moins une couche d'impression, une couche de couleur ou une couche d'impression en couleur disposée sur la surface totale ou sur une partie de celle-ci et, immédiatement sur celle-ci ou au-dessus d'une ou de plusieurs couches intermédiaires au moins
4. une couche de protection ou un film de protection à une ou à plusieurs couches, contenant un polyméthacrylate de méthyle, un polyamide et/ou un polyester, qui contient de préférence au moins un absorbeur d'UV et/ou un stabilisateur UV dans au moins une couche,
dans lequel la réunion du film de protection ou de la couche de protection avec le sous-film ou la sous-couche, ainsi qu'éventuellement avec une ou des couches disposée(s) au-dessus ou entre ceux-ci ou celles-ci, est réalisée par contre-placage et/ou par estampage à des températures de 100 °C à 160 °C ou par un revêtement par co-extrusion à des températures de 130 °C à 230 °C et/ou la couche de protection est appliquée par revêtement, par application avec du solvant ou par polymérisation dans un solvant à des températures de 50 à 160 °C, de préférence de 80 à 120°C.

20. Procédé selon la revendication 19, caractérisé en ce qu'est disposée sur la face inférieure du sous-film ou de la sous-couche, au moins une couche d'adhérence, une couche d'agent adhérant et/ou une couche de réactif, soluble dans l'eau, soluble superficiellement dans l'eau ou insoluble dans l'eau, qui contient, dans le cas de la couche d'adhérence ou de réactif soluble dans l'eau ou soluble superficiellement dans l'eau, outre un agent liant, un agent réagissant avec la couche de colle à appliquer ou un polymère cationique soluble dans l'eau, de préférence une polyimine, ou qui contient ou est constituée, dans le cas d'une couche d'adhérence ou d'une couche d'agent adhérant insoluble dans l'eau ou difficilement soluble dans l'eau, d'une résine synthétique difficilement soluble dans l'eau ou insoluble dans l'eau, contenant des groupes polaires ou d'une matière synthétique contenant des groupes polaires, de préférence au moins un polyacrylate, un polyester, un polyuréthanne et/ou un polyisocyanate.

21. Procédé selon les revendications 19 et 20, caractérisé en ce que la couche de protection ou le film de protection est appliqué(e) en une épaisseur de 5 à 300 µm.

22. Procédé selon une ou plusieurs des revendications 19 à 21, caractérisé en ce que le sous-film ou la sous-couche est fabriqué(e) par laminage ou par extrusion, en ce qu'on dispose ensuite une couche d'adhérence ou d'apprêt, qui est appliquée de préférence sous forme d'un revêtement dans un solvant ou dans un diluant et/ou par des rouleaux à trame sur au moins une face du sous-film ou de la sous-couche, de préférence sur leur face supérieure, en ce qu'on imprime la couche d'adhérence ou d'apprêt appliquée après séchage ou après séchage superficiel sur la face supérieure du sous-film ou de la sous-couche, en plusieurs couches et on applique la couche de protection immédiatement sur celle-ci ou au-dessus d'une couche intermédiaire.

23. Procédé selon une ou plusieurs des revendications 19 à 22, caractérisé en ce que le film stratifié ou la couche, les couches ou le film de protection supérieur(es) est (sont) estampé(es).

24. Utilisation d'un film plastique stratifié à plusieurs couches selon une ou plusieurs des revendications 1 à 23 pour le revêtement de bois et de matériaux dérivés du bois, de portes et de profilés de fenêtres en bois ou en matériaux dérivés du bois, sous forme de film pour la production ou le revêtement de meubles ou d'éléments de meubles ou de pièces de matériaux pour la fabrication de celui-ci (film pour meubles), de même que pour le contre-placage de panneaux de particules, de panneaux en matériaux dérivés du bois, et de bois.

25. Utilisation d'un film plastique stratifié à plusieurs couches selon une ou plusieurs des revendications 1 à 23 pour le revêtement de métaux, en particulier de plaques de tôle, de profilés en tôle ou de pièces en tôle et/ou pour le revêtement de profilés en matière synthétique et de pièces en matière synthétique, de préférence pour le revêtement de profilés de fenêtres et de profilés en matière synthétique.
